# EUROPÄISCHE PATENTSCHRIFT

(11) **EP 1 636 244 B1**
(45) Veröffentlichungstag und Bekanntmachung des Hinweises auf die Patenterteilung: **04.07.2007**
(21) Anmeldenummer: 04735448.5
(22) Anmeldetag: 29.05.2004
(51) Int. Cl.: C07F 15/00

(54) **VERFAHREN ZUR HERSTELLUNG VON HOCHREINEN, TRIS- UND BIS-ORTHO-METALLIERTEN ORGANOMETALL-VERBINDUNGEN**
METHOD FOR PRODUCING HIGHLY PURIFIED, TRIS- AND BIS-ORTHO-METALLATED ORGANOMETALLIC COMPOUNDS
PROCEDE POUR PRODUIRE DES COMPOSES ORGANOMETALLIQUES DE GRANDE PURETE, AYANT SUBI UNE TRIS-ORTHOMETALLATION ET UNE BIS-ORTHOMETALLATION

(30) Priorität: 07.06.2003 DE 10325820
(43) Veröffentlichungstag der Anmeldung: 22.03.2006
(73) Patentinhaber: Merck Patent GmbH, 64293 Darmstadt (DE)
(72) Erfinder: BACH, Ingrid, 65719 Hofheim (DE); STÖSSEL, Philipp, 60487 Frankfurt am Main (DE)
(86) Internationale Anmeldenummer: PCT/EP2004/005853
(87) Internationale Veröffentlichungsnummer: WO 2004/108738

(56) Entgegenhaltungen:
- JP-A- 2004 168 755
- JP-A- 2004 168 756
- JP-A- 2004 168 758
- KONNO, HIDEO ET AL: "Selective one-pot synthesis of facial tris-ortho-metalated iridium(III) complexes using microwave irradiation" CHEMISTRY LETTERS , 32(3), 252-253 CODEN: CMLTAG; ISSN: 0366-7022, 2003, XP002296233 in der Anmeldung erwähnt
- DATABASE CHEMABS [Online] CHEMICAL ABSTRACTS SERVICE, COLUMBUS, OHIO, US; KONNO, HIDEO ET AL: "One-step preparation of ortho-metalated iridium complexes from halogen-bridged dimers" XP002296234 gefunden im STN Database accession no. 141:190941 & JP 2004 238379 A (NATIONAL INSTITUTE OF ADVANCED INDUSTRIAL SCIENCE AND TECHNOLOGY, JAPA) 26. August 2004 (2004-08-26)

## Beschreibung

Metallorganische Verbindungen - speziell Verbindungen der d⁸-Metallewerden in naher Zukunft als Wirkkomponenten (= Funktionsmaterialien) in einer Reihe von verschiedenartigen Anwendungen, die im weitesten Sinne der Elektronikindustrie zugerechnet werden können, Einsatz als farbgebende Komponenten finden.
Bei den auf rein organischen Komponenten basierenden organischen Elektrolumineszenz-Vorrichtungen (allg. Beschreibung des Aufbaus siehe: US 4,539,507 und US 5,151,629) bzw. deren Einzelbauteilen, den organischen lichtemittierenden Dioden (OLEDs) ist die Markteinführung bereits erfolgt, wie die Autoradios mit "organischem Display" der Firma Pioneer und die Digitalkamera (LS 633) der Firma Kodak belegen. Weitere derartige Produkte stehen kurz vor der Einführung. Trotz allem sind hier noch deutliche Verbesserungen nötig, um diese Displays zu einer echten Konkurrenz zu den derzeit marktbeherrschenden Flüssigkristallanzeigen (LCD) zu machen bzw. diese zu überflügeln.
Eine Entwicklung hierzu, die sich in den letzten Jahren abzeichnet, ist der Einsatz von metallorganischen Komplexen, die Phosphoreszenz statt Fluoreszenz zeigen [M. A. Baldo, S. Lamansky, P. E. Burrows, M. E. Thompson, S. R. Forrest, Applied Physics Letters, 1999, 75, 4-6].
Aus theoretischen Spin-statistischen Gründen ist unter Verwendung metallorganischer Verbindungen eine bis zu vierfache Energie- und Leistungseffizienz möglich. Ob sich diese neue Entwicklung durchsetzen wird, hängt zum einen stark davon ab, ob entsprechende Device-Kompositionen gefunden werden können, die diese Vorteile (Triplett-Emission = Phosphoreszenz gegenüber Singulett-Emission = Fluoreszenz) auch in den OLEDs umsetzen können. Als wesentliche Bedingungen für praktische Anwendung sind hier insbesondere eine hohe operative Lebensdauer, eine hohe Stabilität gegenüber Temperaturbelastung und eine niedrige Einsatz- und Betriebsspannung, um mobile Applikationen zu ermöglichen, zu nennen.
Zum anderen muss der effiziente chemische Zugang zu den entsprechenden, hochreinen Organometall-Verbindungen gegeben sein. Dies ist insbesondere unter Berücksichtigung der Seltenheit von Iridium und Platin von maßgebender Bedeutung für die ressourcenschonende Nutzung der genannten Verbindungsklasse.

In der Literatur sind mehrere Verfahren zur Darstellung von tris-ortho-metallierten Organometall-Verbindungen beschrieben. Die allgemeinen Zugangswege, die dadurch erreichten Ausbeuten und ihre Nachteile sind im Folgenden kurz an einem Grundkörper der genannten Verbindungsklasse, dem *fac*-Tris[2-(2-pyridinyl-κN)phenyl-κC]-iridium(III), dargelegt.

Ausgehend von hydratisiertem Iridium(III)-chlorid und 2-Phenylpyridin wurde *fac-*Tris[2-(2-pyridinyl-κN)phenyl-κC]-iridium(III), nach aufwendigen chromatographischen Reinigungsverfahren, in etwa 10 %iger Ausbeute erhalten [K. A. King, P. J. Spellane, R. J. Watts, J. Am. Chem. Soc., 1985, 107, 1431-1432].

K. Dedeian et al. beschreiben ein Verfahren ausgehend von Iridium(III)-acetylacetonat und 2-Phenylpyridin, nach dem *fac*-Tris[2-(2-pyridinyl-κN)phenyl-κC]-iridium(III) in 45 %iger Ausbeute erhalten wurde. Analog zum oben genannten Verfahren muss auch bei diesem Verfahren das Produkt durch chromatographische Reinigung von Verunreinigungen befreit werden, wobei hier - bedingt durch das Löslichkeitsverhalten - halogenierte Kohlenwasserstoffe zum Einsatz kommen [K. Dedeian, P.I. Djurovich, F. O. Garces, G. Carlson, R. J. Watts, Inorg. Chem., 1991, 30, 1685-1687].

In einem dritten literaturbekannten Verfahren Wird Di-µ-chlorotetrakis[2-(2-pyridinyl-κN)phenyl-κC]di-iridium(III), welches zunächst in ca. 72%-iger Ausbeute aus hydratisiertem Iridium(III)-chlorid und 2-Phenylpyridin dargestellt werden muss [S. Spouse, K. A. King, P. J. Spellane, R. J. Watts, J. Am. Chem. Soc., 1984, 106, 6647], als Edukt verwendet. Dieses wird dann mit 2-Phenylpyridin und zweifach molaren Mengen an Silber-trifluormethansulfonat bezogen auf das Di-µ-chlorotetrakis[2-(2-pyridinyl-κN)phenyl-κC]di-iridium(III) umgesetzt. Nach chromatographischer Aufeinigung erhalten die Autoren Tris[2-(2-pyridinyl-κN)phenyl-κC]-iridium(III) in 75 %iger Ausbeute [M. G. Colombo, T. C. Brunold, T. Riedener, H. U. Güdel, Inorg. Chem., 1994, 33, 545-550]. Neben der chromatographischen Aufreinigung, die wiederum mit Hilfe von halogenierten Kohlenwasserstoffen erfolgt, ist die Verwendung von zweifach molaren Mengen an Silber-trifluormethansulfonat bezogen auf das Di-p-chlorotetrakis[2-(2-pyridinyl- κN)phenyl-κC]di-iridium(III) nachteilig.

Die bis dato besten Verfahren wurden von P. Stößel et al. in WO 02/060910 und DE 10314102.2 beschrieben. Diese Verfahren, bestehend aus der Umsetzung von Iridium(III)acetylacetonat bzw. eines ähnlichen 1,3-Diketochelat-Komplexes mit einer entsprechenden Pyridin-aryl oder -heteroaryl-Verbindung in Gegenwart eines dipolar protischen Lösemittels unter starkem Erhitzen für längere Zeit (> 20 h), ergibt sehr gute Ausbeuten (bis zu 96 %) und ebenfalls sehr gute Reinheiten (bis zu 99.9 %). In Tabelle 1 sind diese Verfahren vergleichend gegenübergestellt.

**Tabelle 1**

| | Zitat 1 | Zitat 2 | Zitat 3 | Zitat4 |
|---|---|---|---|---|
| Edukte | IrCl₃ | Ir(acac)₃ | [Ir(ppy)₂Cl]₂ | Ir(acac)₃ |
| | 2-PhPy | 2-PhPy | 2-PhPy | 2-PhPy |
| | | | AgO₃SCF₃ | |
| Lösungsmittel | 2-Ethoxyethanol/ Wasser | Ethylenglykol | keines | Ethylenglykol |
| Temperatur | --- | 196 - 198 °C | 110 °C | 196 - 198 °C |
| Konzentration an Iridium-Edukt | 0.03 mol/l | 0.02 mol/l | --- | 0.1 mol/l |
| Molares Verhältnis von Iridium-Edukt zu 2-PhPy | 1 : 4 | 1 : 6.3 | 1 : 15 | 1 : 10 |
| Reaktionszeit | 24 h | 10 h | 24 h | 60 h |
| Ausbeute | Ca. 10 % als Nebenprodukt von [Ir(µ-Cl)(ppy)]₂ | 45 % | 75 % | 94 % |
| Reinheit nach HPLC | Keine Angabe | Keine Angabe | Keine Angabe | > 99,9% |

| | | | | |
|---|---|---|---|---|
| 2-PhPy: 2-Phenylpyridin Zitat 1: K. A. King, P. J. Spellane, R. J. Watts, J. Am. Chem. Soc., 1985, 107, 1431 - 1432. S. Spouse, K. A. King, P. J. Spellane, R. J. Watts, J. Am. Chem. Soc., 1984, 106, 6647 - 6653. Zitat 2: K. Dedeian, P. I. Djurovich, F. O. Garces, G. Carlson, R. J. Watts, Inorg. Chem., 1991, 30, 1685-1687. Zitat3: M. G. Colombo, T. C. Brunold, T. Riedener, H. U. Güdel, Inorg. Chem., 1994, 33, 545-550. Zitat4: P. Stößel et al., WO 02/060910. | | | | |

Es wurde nun überraschend gefunden, dass die Orthometallierung einer arylischen, vinylischen und/oder allylischen C-H-Bindung eines Liganden an ein Metall durch die Einwirkung von Mikrowellenstrahlung unter gleichzeitiger Erwärmung eine Beschleunigung um wenigstens eine, oftmals jedoch bis zu vier Zehnerpotenzen, erfährt.

Mikrowellen werden auch als elektromagnetische Strahlung mit Radio-Frequenz (300 MHz - 300 000 MHz) bezeichnet [Römpp-Chemie-Lexikon, 1991, Georg Thieme Verlag, Stuttgart].

Castan et al. berichten von einer Orthometallierung an Palladium- und Platinkomplexen unter Einwirkung von Mikrowellenstrahlung auf die ***festen*** Komplexe [P. Castan, B. Labiad, D. Villemin, F. L. Wimmer, S. Wimmer, J. Organomet., 1994, 479, 153].
Sie berichten weiter, dass die Orthometallierung an diesen ***festen*** Komplexen nur dann erfolgreich verläuft, wenn die Feststoffe in ein Wärmeträgerbad eingetaucht werden und führen dies darauf zurück, dass sich das Wärmeträgerbad durch die Einwirkung der Mikrowellenstrahlung erhitzt, und diese Erwärmung die Orthometallierung induziert. Diese Beobachtung wird dadurch gestützt, dass eine reine thermisch induzierte Orthometallierung an diesen festen Komplexen mit vergleichbarer Reaktionsgeschwindigkeit zu identischen Produkten führt. Es handelt sich hier also um ein Beispiel, bei welchem die Mikrowellenstrahlung im Wesentlichen nur indirekt - durch Erwärmung des umgebenden Mediums - die Reaktion initiert.

H. Konno und Y. Sasaki [Chem. Lett., 2003, 32, 252] berichten die Synthese eines tris-ortho-metallierten Iridiumkomplexes unter Einwirkung von Mikrowellenstrahlung auf die Reaktionsmischung bei Raumtemperatur. Dadurch konnten sie die Ausbeute der Synthese von *fac*-Tris[2-(2-pyridinyl-κN)phenyl-κC]-iridium(III) auf 75 % steigern und die Reaktionszeit auf 1 Minute senken. Für gute Ausbeuten ist jedoch ein Metall:Ligand-Verhältnis von deutlich 1:100 nötig, was keinen ressourcenschonenden Einsatz des Liganden zulässt, obwohl dieser teilweise sehr aufwendig in vielen Syntheseschritten hergestellt werden muss. So ist diese Synthesemethode zwar ein Fortschritt gegenüber einigen der Literaturmethoden, jedoch wäre eine nochmals höhere Ausbeute und vor allem ein kleineres Metall-Ligand-Verhältnis erwünscht.

Dem oben Beschriebenen entsprechend, ist Gegenstand der vorliegenden Erfindung ein Verfahren zur Bildung von Kohlenstoff-Metallbindungen durch Orthometallierung aus einem Gemisch aus mindestens einer organischen Verbindung enthaltend mindestens eine C-H-Bindung, vorzugsweise in Form einer arylischen, vinylischen oder allylischen C-H-Bindung, und mindestens einer Metallverbindung in einer Schmelze, Suspension, Dispersion, Lösung oder in einem überkritischen Medium unter Erwärmen auf mindestens 40 °C und Einwirkung von Mikrowellenstrahlung.

Bevorzugt wird die Reaktion in einem Temperaturbereich von 40 bis 250 °C durchgeführt, besonders bevorzugt in einem Temperaturbereich von 100 bis 210 °C.

Besonders bevorzugt sind Verfahren zur Herstellung von Verbindungen der Formel (1), (2), (3), (4), (5a), (5b) und (6) gemäß Schema 1, 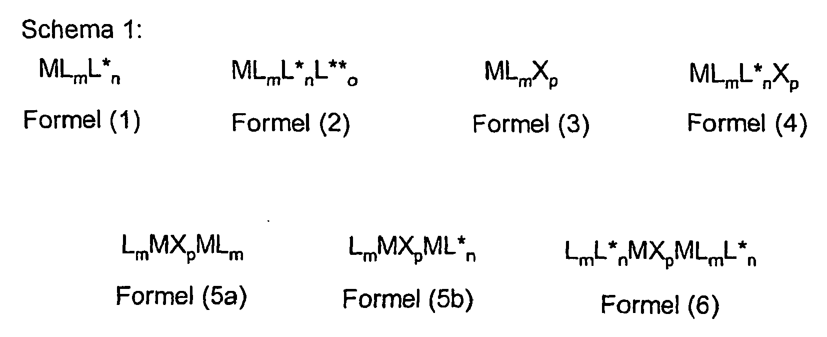 worin gilt:
- M: ist ein Übergangsmetall oder ein Lanthanoid,
- L, L*, L**: sind verschiedene, orthometallierte Liganden,
- X: ist gleich oder verschieden bei jedem Auftreten einem neutralen, anionischen oder kationischen, einzähnigen oder mehrzähnigen, verbrückenden oder chelatisierenden Liganden,
- m: ist 1, 2, oder 3,
- n: ist 0, 1 oder 2,
- o: ist 0 oder 1, wobei jeweils gilt, dass m + n + o = 2 oder 3 ist,
- p: ist 1, 2, 3, 4, 5, 6, 7, 8, 9, 10, 11 oder 12,
und wobei die partielle Struktur MLₘ durch Formel (7), die partielle Struktur ML*ₙ durch Formel (8) und die partielle Struktur ML**ₒ durch die Formel (9) gemäß Schema 2 beschrieben wird, 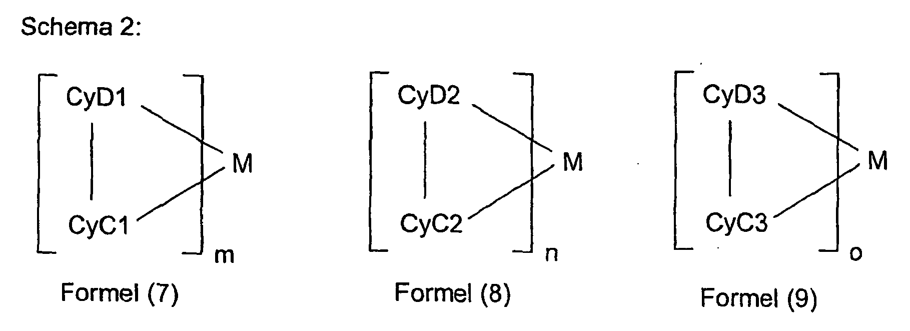 worin gilt:
CyD1, CyD2, CyD3 sind jeweils cyclische Gruppen, die wiederum einen oder mehrere Substituenten R tragen können, enthaltend - endocyclisch oder exocyclisch - ein Donoratom D1, D2 oder D3, über welches die cyclischen Gruppen an das Metall gebunden sind; die Gruppen CyD1 und CyC1, die Gruppen CyD2 und CyC2 wie auch die Gruppen CyD3 und CyC3 sind über eine oder mehrere kovalente Bindung miteinander verbunden,
CyC1, CyC2, CyC3 sind jeweils cyclische Gruppen, die wiederum einen oder mehrere Substituenten R tragen können und je ein Kohlenstoff beinhalten, über welches die cyclischen Gruppen an das Metall gebunden sind,
R sind gleich oder verschieden bei jedem Auftreten F, Cl, Br, I, NO₂, CN, eine geradkettige, verzweigte oder cyclische Alkyl- oder Alkoxygruppe mit 1 bis 20 C-Atomen, wobei ein oder mehrere nicht benachbarte CH₂-Gruppen durch -O-, -S-, -NR¹-, -CONR²-, -CO-O-, -C=O-, -CH=CH- oder -C≡C- ersetzt sein können und wobei ein oder mehrere H-Atome durch F ersetzt sein können, oder eine Aryl- oder Heteroarylgruppe mit 4 bis 14 C-Atomen, die durch einen oder mehrere, nichtaromatische Reste R substituiert sein kann, wobei mehrere Substituenten R, sowohl am selben Ring als auch an den beiden unterschiedlichen Ringen zusammen wiederum ein weiteres mono- oder polycyclisches, aliphatisches oder aromatisches Ringsystem aufspannen können,
R¹ und R² sind gleich oder verschieden H oder ein aliphatischer oder aromatischer Kohlenwasserstoffrest mit 1 bis 20 C-Atomen,
durch Umsetzung einer Metallverbindung M-Verb. mit Verbindungen der Formel (10a), (10b) und/oder (10c) gemäß Schema 3, 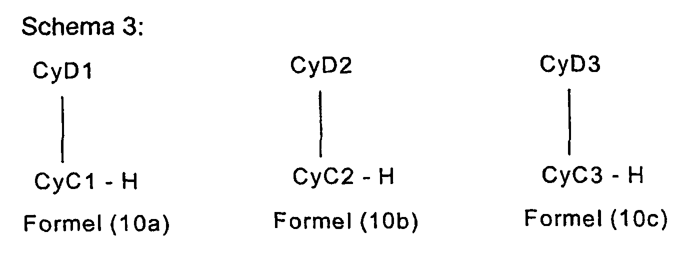 worin die Reste CyD1, CyD2, CyD3, CyC1, CyC2 und CyC3 die unter Formel (7) bis (9) genannten Bedeutungen haben, dadurch gekennzeichnet, dass auf die Schmelze, Suspension, Dispersion, Lösung oder das überkritische Reaktionsmedium enthaltend die Metallverbindung M-Verb. und die Verbindungen der Formel (10a), (10b), (10c) Mikrowellenstrahlung der Frequenz 300 bis 300000 MHz einwirkt und die Reaktionsmischung auf mindestens 40 °C erwärmt wird.

Das erfindungsgemäße Verfahren wird durch ein konkretes Beispiel, die Umsetzung von Phenylpyridin mit einer Iridiumverbindung erläutert (Schema 4), ohne jedoch dieses auf das genannte Beispiel einschränken zu wollen.

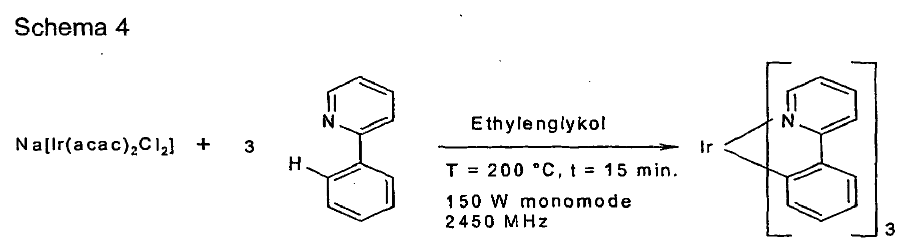

In Tabelle 2 ist die Umsetzung von Phenylpyridin mit einer Iridiumverbindung unter verschiedenen Reaktionsbedingungen vergleichend dargestellt.

**Tabelle 2**

| | **Beispiel 1** | **Beispiel 2** | **Beispiel 3** | **Beispiel 4** |
|---|---|---|---|---|
| **Aktivierung** | Thermisch | Thermisch | Mikrowellen | Mikrowellen |
| **Temperatur** | Ölbad | Ölbad | Mikrowelle | Mikrowelle |
| | 190 °C | 190 °C | 190 °C | 25 °C |
| **Reaktionzeit** / **min.** | 2400 min. = 40 h | 15 min. | 15 min. | 15 min. |
| **Ausbeute (% d. Th.)** | 92.2-96.0 % | Kein Umsatz nachweisbar | 93.7-96.2 % | 77.4-80.7 % |
| **Reinheit** | 99.9 % | --- | 99.9 % | 97.6 % |

Die Reaktionszeit betrachtend, fällt die erhebliche Reaktionsbeschleunigung um mehr als zwei Zehnerpotenzen auf, wenn die erfindungsgemäßen Reaktionsbedingungen angewandt werden.

Die nach diesen Verfahren verarbeiteten Metalle M sind bevorzugt Elemente der Ordungszahl 39 bis 79, besonders bevorzugt sind die Elemente Molybdän, Wolfram, Rhenium, Ruthenium, Osmium, Rhodium, Iridium, Palladium, Platin und Gold.

Bevorzugte Metallverbindungen M-Verb. sind Metallsalze wie wasserhaltige oder wasserfreie Metallhalogenide, wie z. B. Metallfluoride, -chloride, -bromide, -iodide und Halogenid-enthaltende Komplexe und Koordinationsverbindungen, bzw. Metallhydroxide, -oxide oder -alkoholate, bzw. Metall-β-ketoketonate und Metall-β-ketocarboxylate, wie z. B. Metallacetylacetonate, wie Iridium(III)acetylacetonat oder Dinatrium- bzw. Dikalium[diacetylacetonato-dichloro]iridium(III), Metall-2,2,6,6-tetramethyl-heptan-3,5-dionat oder Metallacetylacetate. Besonders bevorzugte Metallverbindungen M-Verb. sind Metall-β-ketoketonate und -β-ketocarboxylate.

Die durch das oben beschriebene Verfahren hergestellten Verbindungen der Formel (1) bis (6) enthalten als Donoratom D1, D2 und D3 Stickstoff, Phosphor, Arsen, Antimon, Bismut, Sauerstoff, Schwefel, Selen oder Tellur, bevorzugt ist das Donoratom Stickstoff.

Bevorzugte Liganden X sind zum einen neutrale, anionische oder kationische einzähnige Liganden, wie z. B. Kohlenmonoxid, Ammoniak, aliphatische, aromatische bzw. gemischt aliphatische / aromatische Amine, Phosphor(III)halogenide, Phosphite, aliphatische, aromatische bzw. gemischt aliphatische / aromatische Phosphine, Arsine, Stibine, bzw. Halogenide und Pseudohalogenide, wie z. B. Fluorid, Chlorid, Bromid, Iodid und Cyanid, Cyanat, Isocyanat, bzw. Acetylid, Hydrid, Hydroxid oder Alkoxid, zum anderen mehrzähnige verbrückende Liganden wie Halogenide, wie z. B. Fluorid, Chlorid, Bromid, Iodid, oder Alkoxide oder Carboxylate, wie z. B. Acetat, Propionat, Benzoat, oder mehrzähnige chelatisierende Liganden wie Carboxylate, wie z. B. Acetat, Propionat, Benzoat, α-Amino-carboxylate, wie z. B. Pyridin-2-carboxylat, Aminoborate, wie z. B. Tetrakis(1-pyrazolyl)borat, und besonders bevorzugt Acetylacetonate der Formel (11) gemäß Schema 5, 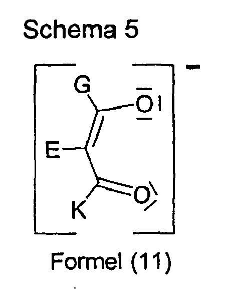 wobei gilt:
- G, K: ist gleich oder verschieden bei jedem Auftreten eine lineare oder verzweigte Alkylgruppe mit 1-20 Kohlenstoffatomen, wobei ein oder mehrere nicht benachbarte CH₂-Gruppen durch -O-, -S-, -NR¹-, -CONR²-, -CO-O-, -CO-, -CH=CH- oder -C≡C- ersetzt sein können und wobei ein oder mehrere H-Atome durch F oder aromatische Gruppen ersetzt sein können, oder eine Aryl- und/oder Heteroarylgruppe mit 3-20 Kohlenstoffatomen oder ein Alkoholat OR¹,
- E: ist gleich oder verschieden bei jedem Auftreten eine lineare oder verzweigte Alkylgruppe mit 1-20 Kohlenstoffatomen, wobei ein oder mehrere nicht benachbarte CH₂-Gruppen durch -O-, -S-, -NR¹-, -CONR²-, -CO-O-, -CO-, -CH=CH- oder -C≡C- ersetzt sein können und wobei ein oder mehrere H-Atome durch F oder aromatische Gruppen ersetzt sein können, oder eine Aryl- und/oder Heteroarylgruppe mit 3-20 Kohlenstoffatomen.

Bevorzugt ist Mikrowellenstrahlung der Frequenz 500 bis 10000 MHz und besonders bevorzugt einer Frequenz zwischen 1000 MHz und 5000 MHz.

Die Leistung der eingestrahlten Mikrowellen kann zwischen 1W pro Liter und 10000 W pro Liter, bevorzugt zwischen 10 W pro Liter und 1000 W pro Liter, besonders bevorzugt zwischen 50 W pro Liter und 500 W pro Liter betragen.

Diese Mikrowellenstrahlung kann entweder vom Typ monomode (fokusierend) oder multimode sein. Bevorzugt ist die Mikrowellenstrahlung vom Typ monomode (fokusierend).

Das Verfahren kann entweder nach einem kontinuierlichen Verfahren oder in einem diskontinuierlichen Chargen-Verfahren durchgeführt werden. In einem kontinuierlichen Verfahren kann die Reaktionsmischung über ein Schlauch- oder Rohrsystem durch einen Mikrowellengenerator geleitet oder in Zyklen umgepumpt werden. Dagegen wird im Chargen-Verfahren die gesamte Reaktionsmischung (Charge) in einem geeigneten Behältnis der Mikrowellenstrahlung ausgesetzt.

Erfindungsgemäß liegt die Konzentration der Metallverbindung im Bereich von 0.001 bis 10.00 molar, bevorzugt im Bereich von 0.010 bis 1.0 molar und besonders bevorzugt im Bereich von 0.10 bis 0.25 molar.

Das erfindungsgemäße molare Verhältnis der Metallverbindung zu den Verbindungen der Formel (10a) bis (10c) beträgt 1:1 bis 1: 20. Dies ist eine deutliche Verbesserung gegenüber dem Stand der Technik, wo mehr als 100 Äquivalente des Liganden eingesetzt werden mussten, um brauchbare Ausbeuten zu erzielen.

Zur Darstellung homoleptischer Komplexe der Formel (1) und (2) mit n = 0 und / oder o = 0 wird ein erfindungsgemäßes molare Verhältnis 1:3 bis 1:15 bevorzugt. Ein Verhältnis von 1:6 bis 1:12 wird besonders bevorzugt.

Erfindungsgemäße Reaktionsmedien sind hochsiedende Lösungsmittel wie Ethylenglykol oder Propylenglykol, bzw. auch höhere Diole oder Polyalkohole, wie z. B. Glycerin, bzw. auch Polyether-alkohole wie Polyethylenglykole, beispielsweise PEG600 und PEG1000, sowie deren veretherte Analoga, wie z. B. Triethylenglykoldimethylether oder Poly(ethylenglykol)dimethylether, sowie Diarylether wie Diphenylether, sowie Dialkylformamide wie Dimethylformamid, Diethylformamid oder N-Methylpyrrolidinon, sowie Sulfoxide wie Dimethylsulfoxid oder Sulfone wie Dimethylsulfon, sowie überkritische Medien wie CO₂ im überkritischen Zustand.

Erfindungsgemäß wird die Reaktion innerhalb von 1 bis 300 min. durchgeführt, bevorzugt im Bereich von 5 bis 30 min..

Gegenüber dem Stand der Technik weist das erfindungsgemäße Verfahren die folgenden Vorteile auf:
1. Die Reaktionszeit ist um ein Vielfaches kürzer im Vergleich zu Verfahren, in denen keine Mikrowellenstrahlung verwendet wird. Dies ist ein deutlicher technischer Vorteil.
2. Die Ausbeute ist deutlich höher, wenn die Mikrowellenstrahlung auf eine Reaktionsmischung bei erhöhter Temperatur einwirkt im Vergleich zur Einwirkung von Mikrowellenstrahlung bei Raumtemperatur. Gerade unter Berücksichtigung der Seltenheit von Iridium und mancher anderer der genannten Metalle ist die Ausbeute von großer Bedeutung für den ressourcenschonenden Umgang mit diesen Metallen.
3. Das ligand:Metall-Verhältnis der Reaktionsmischung ist deutlich kleiner im Vergleich zur Einwirkung von Mikrowellenstrahlung bei Raumtemperatur. Da manche der Liganden sehr aufwendig synthetisiert werden müssen, ist dies ein erheblicher Vorteil gegenüber dem Stand der Technik, wenn nicht ein großer Teil des Liganden verschwendet wird bzw. nach der Synthese aufwendig aus der Reaktionsmischung zurückgewonnen werden muss.
4. Die im Stand der Technik beschriebenen Verbindungen der Formel (1) bis (6) sind bislang teilweise maximal in Reinheiten von bis zu 96 % zugänglich gewesen. Durch die erfindungsgemäße Herstellung können diese Verbindungen jedoch in Reinheiten von mehr als 99.0 %, zum Teil bis zu 99.9 %, erhalten werden.

Die vorliegende Erfindung wird durch die nachfolgenden Beispiele näher erläutert, ohne jedoch diese auf die Beispiele einschränken zu wollen. Dem Fachmann auf dem Gebiet der organischen und metallorganischen Synthese ist es hiermit ohne weitere erfinderische Tätigkeit möglich, an weiteren Systemen und auch an anderen Metallen die oben beschriebenen erfindungsgemäßen Umsetzungen durchzuführen.

### Beispiele

### Synthese von tris-ortho-metallierten Organometall-Verbindungen:

Die nachfolgenden Synthesen wurden bis zur Aufarbeitung unter einer trockenen Rein-Stickstoffatmosphäre oder -Argonatmosphäre unter Verwendung sorgfältig getrockneter Lösungsmittel durchgeführt. Die verwendeten Edukte wurden bei ALDRICH [Ethylenglykol] und ABCR [Na[lrCl₂(acac)₂]] bezogen und ohne weitere Reinigung verwendet; 2-Phenyl-pyridin wurde analog zu E. I. Negeshi, F. T. Luo, R. Frisbee, H. Matsushita, Heterocycles, 1982, 18, 117, hergestellt.
Die Versuche unter Mikrowelleneinwirkung wurden in einem Discover^{™}-Gerät der Fa. CEM-GmbH, Kamp-Lintford, Deutschland durchgeführt. Die Magnetron Frequenz betrug 2450 MHz, die Leistung betrug 150 W pro Liter.
Es lassen sich aber auch andere Geräte verwenden, z. B. SmithSynthesizer^{™}, PersonalChemistry GmbH, Konstanz, Deutschland.

### Beispiel 1: fac-Tris[2-(2-pyridinyl-κN)phenyl-κC]-iridium(III) Vergleichsbeispiel

Zu 10 ml entgastem Ethylenglykol wurden 0.484 g (1.0 mmol) Na[IrCl₂(acac)₂] und 1.552 g (1.43 ml, 10 mmol) 2-Phenylpyridin zugegeben. Die Suspension wurde unter gutem Rühren 60 h unter Rückfluss (190 °C) erhitzt. Nach Abkühlen auf Raumtemperatur wurde die Reaktionsmischung, die das Produkt *fac*-Tris[2-(2-pyridinyl-κN)phenyl-κC]-iridium(III) in Form eines gelben, feinkristallinen Niederschlags enthielt, unter Rühren in ein Gemisch von 20 ml wässriger 1 N Salzsäure und 60 ml Ethanol eingegossen. Nach 5 minütigem Rühren wurde über eine Glasfilternutsche (P3) abgesaugt, der gelbe, feinkristalline Niederschlag wurde dreimal mit je 5 ml wässriger 1 N Salzsäure und fünfmal mit je 5 ml Wasser und fünfmal mit je 5 ml Ethanol gewaschen, und anschließend im Hochvakuum 5 h bei 80 °C und 2 h bei 200 °C getrocknet.
Die Ausbeute - bei einer Reinheit von > 99.9 % nach HPLC - betrug 0.604 - 0.629 g, entsprechend 92.2 - 96.0 %.
¹H NMR (CDCl₃): [ppm] = 7.84 (m, 3 H), 7.58 (m, 6 H), 7.48 (m, 3 H), 6.82 (m, 6 H), 6.69 (m, 6 H).

### Beispiel 2: fac-Tris[2-(2-pyridinyl-κN)phenyl-κC]-iridium(III) Vergleichsbeispiel

Durchführung analog Beispiel 1, jedoch wurde die Reaktion nach 15 min. Rühren bei 190 °C abgebrochen. Es konnte kein Produkt isoliert werden.

### Beispiel 3: fac-Tris[2-(2-pyridinyl-κN)phenyl-κC]-iridium(III) Erfindungsgemäßes Beispiel

Zu 10 ml entgastem Ethylenglykol wurden 0.484 g (1.0 mmol) Na[IrCl₂(acac)₂] und 1.552 g (1.43 ml, 10 mmol) 2-Phenylpyridin zugegeben. Die Suspension wurde unter gutem Rühren 15 min. bei 190 °C einer oben spezifizierten Mikrowellenstrahlung ausgesetzt. Nach Abkühlen auf Raumtemperatur wurde die Reaktionsmischung, die das Produkt *fac*-Tris[2-(2-pyridinyl-κN)phenyl-κC]-iridium(III) in Form eines gelben, feinkristallinen Niederschlags enthielt, unter Rühren in ein Gemisch von 20 ml wässriger 1 N Salzsäure und 60 ml Ethanol eingegossen. Nach 5 minütigem Rühren wurde über eine Glasfilternutsche (P3) abgesaugt, der gelbe, feinkristalline Niederschlag wurde dreimal mit je 5 ml wässriger 1 N Salzsäure, fünfmal mit je 5 ml Wasser und fünfmal mit je 5 ml Ethanol gewaschen, und anschließend im Hochvakuum 5 h bei 80 °C und 2 h bei 200 °C getrocknet.
Die Ausbeute - bei einer Reinheit von > 99.9 % nach HPLC - betrug 0.614 - 0.630 g, entsprechend 93.7 - 96.2 %.
¹H NMR (CDCl₃): [ppm] = siehe Beispiel 1

### Beispiel 4: fac-Tris[2-(2-pyridinyl-κN)phenyl-κC]-iridium(III) Vergleichsbeispiel

Durchführung analog Beispiel 3, jedoch wurde die Reaktion bei Raumtemperatur (25 °C durchgeführt).
Die Ausbeute - bei einer Reinheit von 97.6 % nach HPLC - betrug 77.4 - 80.7 %.

## Patentansprüche

1. Verfahren zur Bildung von Kohlenstoff-Metallbindungen durch Orthometallierung aus einem Gemisch aus einer oder mehreren organischen Verbindungen, enthaltend mindestens eine C-H-Bindung und mindestens einer Metallverbindung in einer Schmelze, Suspension, Dispersion, Lösung oder in einem überkritischen Medium, **dadurch gekennzeichnet, dass** Mikrowellenstrahlung auf das Gemisch einwirkt und dass das Reaktionsgemisch auf mindestens 40 °C erwärmt wird.

2. Verfahren gemäß Anspruch 1, **dadurch gekennzeichnet, dass** die Reaktion bei 100 bis 210 °C durchgeführt wird.

3. Verfahren gemäß Anspruch 1 und/oder 2 zur Herstellung von Verbindungen der Formel (1), (2), (3), (4), (5a), (5b) und (6) gemäß Schema 1, 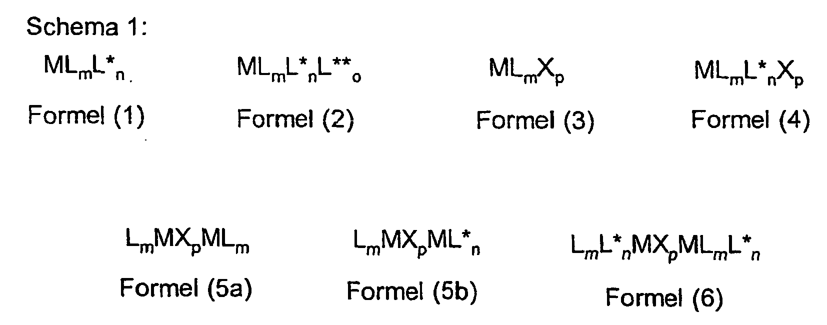 worin gilt:
M ist ein Übergangsmetall oder ein Lanthanoid,
L, L*, L** sind verschiedene orthometallierte Liganden,
X ist gleich oder verschieden bei jedem Auftreten einem neutralen, anionischen oder kationischen, einzähnigen oder mehrzähnigen, verbrückenden oder chelatisierenden Liganden,
m ist 1, 2, oder 3,
n ist 0, 1 oder 2,
o ist 0 oder 1, wobei jeweils gilt, dass m + n + o = 2 oder 3 ist,
p ist 1, 2, 3, 4, 5, 6, 7, 8, 9, 10, 11 oder 12,
und wobei die partielle Struktur MLₘ durch die Formel (7), die partielle Struktur ML*ₙ durch die Formel (8) und die partielle Struktur ML**ₒ durch die Formel (9) gemäß Schema 2 beschrieben wird, 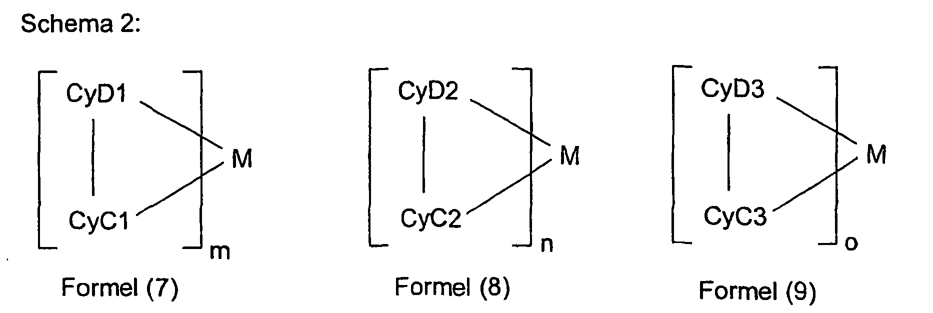 worin gilt:
CyD1, CyD2, CyD3 sind jeweils cyclische Gruppen, die wiederum ein oder mehrere Substituenten R tragen können, enthaltend - endocyclisch oder exocyclisch - ein Donoratom D1, D2 und D3, über welches die cyclischen Gruppen an das Metall gebunden sind; die Gruppen CyD1 und CyC1, die Gruppen CyD2 und CyC2 wie auch die Gruppen CyD3 und CyC3 sind über eine oder mehrere kovalente Bindungen miteinander verbunden,
CyC1, CyC2, CyC3 sind jeweils cyclische Gruppen, die wiederum einen oder mehrere Substituenten R tragen können und je ein Kohlenstoff beinhalten, über welches die cyclischen Gruppen an das Metall gebunden sind,
R sind gleich oder verschieden bei jedem Auftreten F, Cl, Br, I, NO₂, CN, eine geradkettige, verzweigte oder cyclische Alkyl- oder Alkoxygruppe mit 1 bis 20 C-Atomen, wobei ein oder mehrere nicht benachbarte CH₂-Gruppen durch -O-, -S-, -NR¹-, -CONR²-, -CO-O-, -C=O-, -CH=CH- oder -C≡C- ersetzt sein können und wobei ein oder mehrere H-Atome durch F ersetzt sein können, oder eine Aryl- oder Heteroarylgruppe mit 4 bis 14 C-Atomen, die durch einen oder mehrere, nichtaromatische Reste R substituiert sein kann, wobei mehrere Substituenten R, sowohl am selben Ring als auch an den beiden unterschiedlichen Ringen zusammen wiederum ein weiteres mono- oder polycyclisches, aliphatisches oder aromatisches Ringsystem aufspannen können,
R¹ und R² sind gleich oder verschieden H oder ein aliphatischer oder aromatischer Kohlenwasserstoffrest mit 1 bis 20 C-Atomen,
durch Umsetzung einer Metallverbindung M-Verb. mit Verbindungen der Formel (10a), (10b), (10c) gemäß Schema 3, 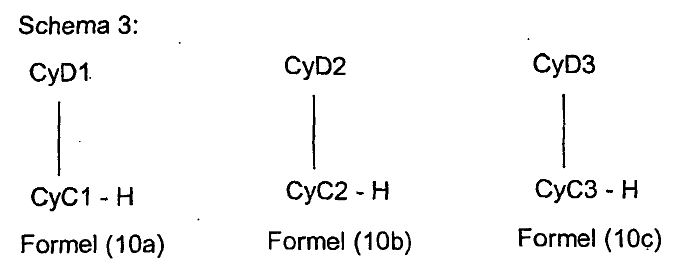 worin die Reste CyD1, CyD2, CyD3, CyC1, CyC2 und CyC3 die unter Formel (7) bis (9) genannten Bedeutungen haben, **dadurch gekennzeichnet, dass** die Reaktionsmischung auf mindestens 40 °C erwärmt wird und auf die Mischung enthaltend die Metallverbindung M-Verb. und die Verbindungen der Formel (10a), (10b), (10c) Mikrowellenstrahlung der Frequenz 300 bis 300000 MHz einwirkt.

4. Verfahren gemäß einem oder mehreren der Ansprüche 1 bis 3, **dadurch gekennzeichnet, dass** als Metalle M bevorzugt Elemente der Ordungszahl 39 bis 79 verwendet werden.

5. Verfahren gemäß Anspruch 4, **dadurch gekennzeichnet, dass** als Metalle M die Elemente Molybdän, Wolfram, Rhenium, Ruthenium, Osmium, Rhodium, Iridium, Palladium, Platin und Gold verwendet werden.

6. Verfahren gemäß einem oder mehreren der Ansprüche 1 bis 5, **dadurch gekennzeichnet, dass** als Metallverbindungen M-Verb. wasserhaltige oder wasserfreie Metallhalogenide und/oder Halogenid-enthaltende Komplexe und Koordinationsverbindungen, bzw. Metallhydroxide, -oxide oder -alkoholate, bzw. Metall-β-ketoketonate und Metall-β-ketocarboxylate verwendet werden.

7. Verfahren gemäß einem oder mehreren der Ansprüche 1 bis 6, **dadurch gekennzeichnet, dass** die Donoratome D1, D2 und D3 Verbindungen der Formel (10a), (10b) und (10c) Stickstoff, Phosphor, Arsen, Antimon, Bismut, Sauerstoff, Schwefel, Selen oder Tellur entspricht.

8. Verfahren gemäß einem oder mehreren der Ansprüche 1 bis 7, **dadurch gekennzeichnet, dass** die Liganden X neutrale, anionische oder kationische einzähnige Liganden, mehrzähnige verbrückende Liganden oder mehrzähnige chelatisierende Liganden sind.

9. Verfahren gemäß gemäß Anspruch 8, **dadurch gekennzeichnet, dass** die Liganden X bevorzugt Acetylacetonate der Formel (11) gemäß Schema 5 sind, 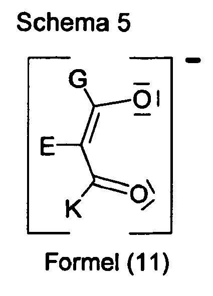 wobei gilt:
K, G ist gleich oder verschieden bei jedem Auftreten eine lineare oder verzweigte Alkylgruppe mit 1-20 Kohlenstoffatomen, wobei ein oder mehrere nicht benachbarte CH₂-Gruppen durch -O-, -S-, -NR¹-, -CONR²-, -CO-O-, -CO-, -CH=CH- oder -C≡C- ersetzt sein können und wobei ein oder mehrere H-Atome durch F oder aromatische Gruppen ersetzt sein können, oder eine Aryl- und/oder Heteroarylgruppe mit 3-20 Kohlenstoffatomen oder ein Alkoholat OR¹,
E ist gleich oder verschieden bei jedem Auftreten eine lineare oder verzweigte Alkylgruppe mit 1-20 Kohlenstoffatomen, wobei ein oder mehrere nicht benachbarte CH₂-Gruppen durch -O-, -S-, -NR¹-, -CONR²-, -CO-O-, -CO-, -CH=CH- oder -C≡C- ersetzt sein können und wobei ein oder mehrere H-Atome durch F oder aromatische Gruppen ersetzt sein können, oder eine Aryl- und/oder Heteroarylgruppe mit 3-20 Kohlenstoffatomen,
R¹ hat dieselbe Bedeutung, wie in Anspruch 3 beschrieben.

10. Verfahren gemäß einem oder mehreren der Ansprüche 1 bis 9, **dadurch gekennzeichnet, dass** Mikrowellenstrahlung der Frequenz 500 bis 10000 MHz wird.

11. Verfahren gemäß einem oder mehreren der Ansprüche 1 bis 10, **dadurch gekennzeichnet, dass** die verwendete Leistung 1 Watt pro Liter bis 10000 Watt pro Liter beträgt.

12. Verfahren gemäß einem oder mehreren der Ansprüche 1 bis 11, **dadurch gekennzeichnet, dass** die Mikrowellenstrahlung vom Typ monomode ist.

13. Verfahren gemäß einem oder mehreren der Ansprüche 1 bis 12, **dadurch gekennzeichnet, dass** es nach einem kontinuierlichen Verfahren oder in einem diskontinuierlichen Chargen-Verfahren durchgeführt wird.

14. Verfahren gemäß einem oder mehreren der Ansprüche 1 bis 13, **dadurch gekennzeichnet, dass** es sich bei der oder den C-H-Bindung(en) um eine arylische, vinylische und/oder allylische C-H-Bindung handelt.

15. Verfahren gemäß einem oder mehreren der Ansprüche 1 bis 14, **dadurch gekennzeichnet, dass** das molare Verhältnis der Metallverbindung zu den Verbindungen der Formel (10a), (10b), (10c) 1:1 bis 1:20 beträgt.

16. Verfahren gemäß Anspruch 15, **dadurch gekennzeichnet, dass** zur Synthese homoleptischer Komplexe das molare Verhältnis der Metallverbindung zu den Verbindungen der Formel (10a), (10b), (10c) 1:6 bis 1:12 beträgt.

## Claims

1. Process for the formation of carbon-metal bonds by orthometallation from a mixture of one or more organic compounds containing at least one C-H bond and at least one metal compound in a melt, suspension, dispersion, solution or a supercritical medium, **characterised in that** microwave radiation acts on the mixture and **in that** the reaction mixture is warmed to at least 40°C.

2. Process according to Claim 1, **characterised in that** the reaction is carried out at 100 to 210°C.

3. Process according to Claim 1 and/or 2 for the preparation of compounds of the formulae (1), (2), (3), (4), (5a), (5b) and (6) as shown in Scheme 1, 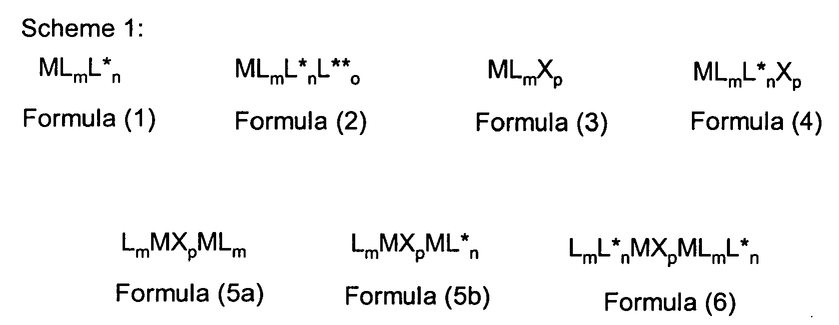 in which:
M is a transition metal or a lanthanoid,
L, L*, L** are different orthometallated ligands,
X is, identically or differently on each occurrence, a neutral, anionic or cationic, monodentate or multidentate, bridging or chelating ligand,
m is 1, 2 or 3,
n is 0, 1 or 2,
o is 0 or 1, where in each case m + n + o = 2 or 3,
p is 1, 2, 3, 4, 5, 6, 7, 8, 9, 10, 11 or 12,
and where the partial structure MLₘ is described by the formula (7), the partial structure ML*ₙ is described by the formula (8) and the partial structure ML**ₒ is described by the formula (9) as shown in Scheme 2, 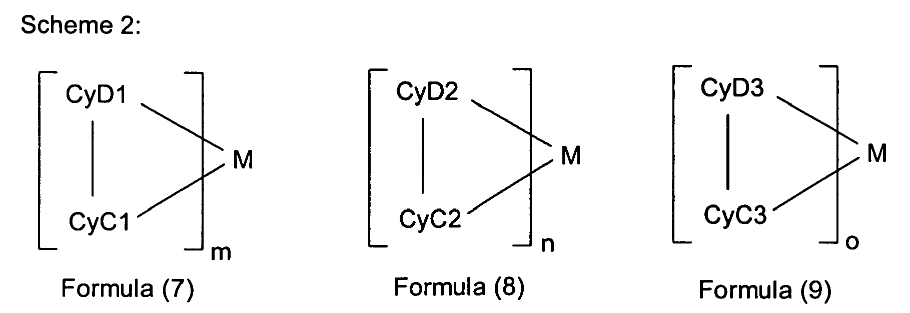 in which:
CyD1, CyD2, CyD3 are each cyclic groups, which may in turn carry one or more substituents R, containing - endocyclically or exocyclically - a donor atom D1, D2 and D3, via which the cyclic groups are bonded to the metal; the groups CyD1 and CyC1, the groups CyD2 and CyC2 and also the groups CyD3 and CyC3 are connected to one another via one or more covalent bonds,
CyC1, CyC2, CyC3 are each cyclic groups, which may in turn carry one or more substituents R and each contain one carbon, via which the cyclic groups are bonded to the metal,
R is, identically or differently on each occurrence, F, Cl, Br, I, NO₂, CN, a straight-chain, branched or cyclic alkyl or alkoxy group having 1 to 20 C atoms, in which one or more non-adjacent CH₂ groups may be replaced by -O-, -S-, -NR¹-, -CONR²-, -CO-O-, -C=O-, -CH=CH- or -C≡C- and in which one or more H atoms may be replaced by F, or an aryl or heteroaryl group having 4 to 14 C atoms, which may be substituted by one or more non-aromatic radicals R, where a plurality of substituents R, both on the same ring and also on the two different rings, may together in turn form a further mono- or polycyclic, aliphatic or aromatic ring system,
R¹ and R² are, identically or differently, H or an aliphatic or aromatic hydrocarbon radical having 1 to 20 C atoms,
by reaction of a metal compound M-comp. with compounds of the formula (10a), (10b), (10c) as shown in Scheme 3, 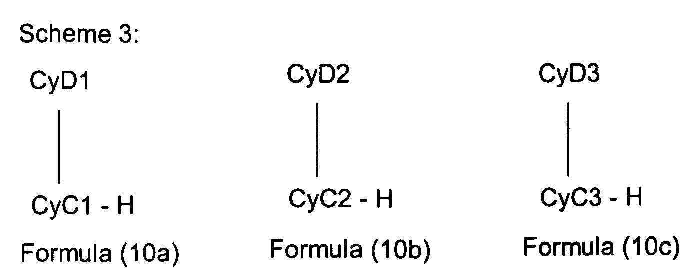 in which the radicals CyD1, CyD2, CyD3, CyC1, CyC2 and CyC3 have the meanings mentioned under formulae (7) to (9), **characterised in that** the reaction mixture is warmed to at least 40°C, and microwave radiation having a frequency of 300 to 300,000 MHz acts on the mixture comprising the metal compound M-comp. and the compounds of the formulae (10a), (10b), (10c).

4. Process according to one or more of Claims 1 to 3, **characterised in that** the metals M used are preferably elements having an atomic number of 39 to 79.

5. Process according to Claim 4, **characterised in that** the metals M used are the elements molybdenum, tungsten, rhenium, ruthenium, osmium, rhodium, iridium, palladium, platinum and gold.

6. Process according to one or more of Claims 1 to 5, **characterised in that** the metal compounds M-comp. used are water-containing or water-free metal halides and/or halide-containing complexes and coordination compounds, or metal hydroxides, oxides or alkoxides, or metal β-ketoketonates and metal β-ketocarboxytates.

7. Process according to one or more of Claims 1 to 6, **characterised in that** the donor atoms D1, D2 and D3 in the compounds of the formulae (10a), (10b) and (10c) correspond to nitrogen, phosphorus, arsenic, antimony, bismuth, oxygen, sulfur, selenium or tellurium.

8. Process according to one or more of Claims 1 to 7, **characterised in that** the ligands X are neutral, anionic or cationic monodentate ligands, multidentate bridging ligands or multidentate chelating ligands.

9. Process according to Claim 8, **characterised in that** the ligands X are preferably acetylacetonates of the formula (11) as shown in Scheme 5, 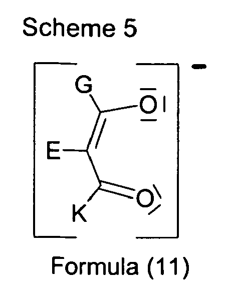 where:
K, G are, identically or differently on each occurrence, a linear or branched alkyl group having 1-20 carbon atoms, in which one or more non-adjacent CH₂ groups may be replaced by -O-, -S-, -NR¹-, -CONR²-, -CO-O-, -CO-, -CH=CH- or -C≡C- and in which one or more H atoms may be replaced by F or aromatic groups, or an aryl and/or heteroaryl group having 3-20 carbon atoms or an alkoxide OR¹,
E is, identically or differently on each occurrence, a linear or branched alkyl group having 1-20 carbon atoms, in which one or more non-adjacent CH₂ groups may be replaced by -O-, -S-, -NR¹-, -CONR²-, -CO-O-, -CO-, -CH=CH- or -C≡C- and in which one or more H atoms may be replaced by F or aromatic groups, or an aryl and/or heteroaryl group having 3-20 carbon atoms,
R¹ has the same meaning as described in Claim 3.

10. Process according to one or more of Claims 1 to 9, **characterised in that** microwave radiation having a frequency of 500 to 10,000 MHz is used.

11. Process according to one or more of Claims 1 to 10, **characterised in that** the power used is 1 watt per litre to 10,000 watts per litre.

12. Process according to one or more of Claims 1 to 11, **characterised in that** the microwave radiation is of the monomodal type.

13. Process according to one or more of Claims 1 to 12, **characterised in that** it is carried out by a continuous process or in a discontinuous batch process.

14. Process according to one or more of Claims 1 to 13, **characterised in that** the C-H bond(s) is (are) an arylic, vinylic and/or allylic C-H bond.

15. Process according to one or more of Claims 1 to 14, **characterised in that** the molar ratio of the metal compound to the compounds of the formulae (10a), (10b), (10c) is 1:1 to 1:20.

16. Process according to Claim 15, **characterised in that**, for the synthesis of homoleptic complexes, the molar ratio of the metal compound to the compounds of the formulae (10a), (10b), (10c) is 1:6 to 1:12.

## Revendications

1. Procédé pour la formation de liaisons carbone-métal par orthométallation à partir d'un mélange d'un ou de plusieurs composés organiques contenant au moins une liaison C-H et d'au moins un composé métallique à l'état de fusion, en suspension, en dispersion, en solution ou en milieu super-critique, **caractérisé en ce qu'**un rayonnement micro-ondes opère sur le mélange et **en ce que** le mélange de réaction est chauffé jusqu'à au moins 40°C.

2. Procédé selon la revendication 1, **caractérisé en ce que** la réaction est mise en oeuvre à 100 à 210°C.

3. Procédé selon la revendication 1 et/ou 2 pour la préparation de composés des formules (1), (2), (3), (4), (5a), (5b) et (6) comme représenté selon le Schéma 1, 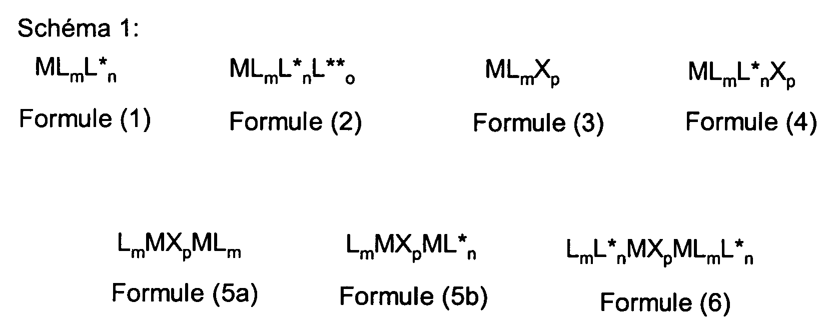 selon lequel:
M est un métal de transition ou un lanthanoïde,
L, L*, L** sont des ligands orthométallatés différents,
X est, de manière identique ou différente lors de chaque occurrence, un ligand de pontage ou chélatant neutre, anionique ou cationique, monodentate ou multidentate,
m est 1, 2 ou 3,
n est 0, 1 ou 2,
o est 0 ou 1, où, dans chaque cas m + n + o = 2 ou 3,
p est 1, 2, 3, 4, 5, 6, 7, 8, 9, 10, 11 ou 12,
et où la structure partielle MLₘ est décrite par la formule (7), la structure partielle ML*ₙ est décrite par la formule (8) et la structure partielle ML**ₒ est décrite par la formule (9) comme représenté selon le Schéma 2, 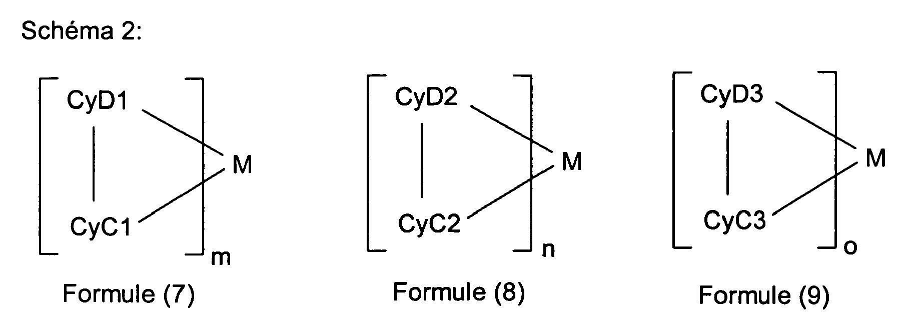 selon lequel:
CyD1, CyD2, CyD3 sont chacun des groupes cycliques, lesquels peuvent à leur tour être porteurs d'un ou de plusieurs substituants R, contenant - endocycliquement ou exocycliquement - un atome donneur D1, D2 et D3, via lequel les groupes cycliques sont liés au métal; les groupes CyD1 et CyC1, les groupes CyD2 et CyC2 et également les groupes CyD3 et CyC3 sont connectés les uns aux autres via une ou plusieurs liaisons covalentes,
CyC1, CyC2, CyC3 sont chacun des groupes cycliques, lesquels peuvent à leur tour être porteurs d'un ou de plusieurs substituants R et contenir chacun un carbone, via lequel les groupes cycliques sont liés au métal,
R est, de manière identique ou différente lors de chaque occurrence, F, Cl, Br, I, NO₂, CN, un groupe alkyle ou alcoxy en chaîne droite, ramifié ou cyclique comportant de 1 à 20 atomes de C, où un ou plusieurs groupes CH₂ non adjacents peuvent être remplacés par -O-, -S-, -NR¹-, -CONR²-, -CO-O-, -C=O-, -CH=CH- ou -C≡C- et où un ou plusieurs atomes de H peuvent être remplacés par F, ou un groupe aryle ou hétéroaryle comportant de 4 à 14 atomes de C, lesquels peuvent être substitués par un ou plusieurs radicaux non aromatiques R, où une pluralité de substituants R, à la fois sur le même cycle et également sur les deux cycles différents, peuvent à leur tour former ensemble un autre système de cycles aliphatique ou aromatique mono- ou polycyclique,
R¹ et R² sont, de manière identique ou différente, H ou un radical hydrocarbone aliphatique ou aromatique comportant de 1 à 20 atomes de C,
par réaction d'un composé métallique M-comp. avec des composés de la formule (10a), (10b), (10c) comme représenté selon le Schéma 3, 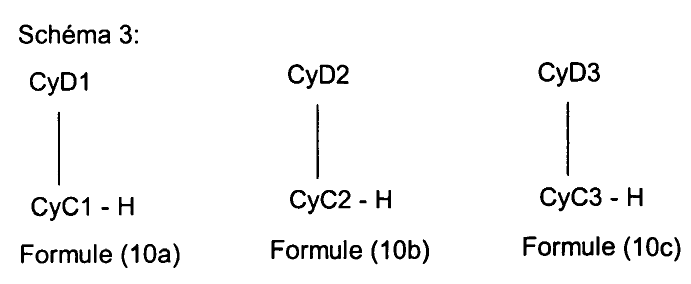 selon lequel les radicaux CyD1, CyD2, CyD3, CyC1, CyC2 et CyC3 présentent les significations mentionnées sous les formules (7) à (9), **caractérisé en ce que** le mélange de réaction est chauffé jusqu'à au moins 40°C, et un rayonnement micro-ondes présentant une fréquence de 300 à 300 000 MHz opère sur le mélange comprenant le composé métallique M-comp. et les composés des formules (10a), (10b), (10c).

4. Procédé selon une ou plusieurs des revendications 1 à 3, **caractérisé en ce que** les métaux M utilisés sont de préférence des éléments présentant un numéro atomique de 39 à 79.

5. Procédé selon la revendication 4, **caractérisé en ce que** les métaux M utilisés sont les éléments molybdène, tungstène, rhénium, ruthénium, osmium, rhodium, iridium, palladium, platine et or.

6. Procédé selon une ou plusieurs des revendications 1 à 5, **caractérisé en ce que** les composés métalliques M-comp. utilisés sont des halogénures métalliques contenant de l'eau ou des halogénures métalliques exempts d'eau et/ou des complexes contenant des halogénures et des composés de coordination, ou des hydroxydes, des oxydes ou des alcoxydes métalliques, ou des β-cétocétonates métalliques et des β-cétocarboxylates métalliques.

7. Procédé selon une ou plusieurs des revendications 1 à 6, **caractérisé en ce que** les atomes donneurs D1, D2 et D3 dans les composés des formules (10a), (10b) et (10c) correspondent à azote, phosphore, arsenic, antimoine, bismuth, oxygène, soufre, sélénium ou tellurium.

8. Procédé selon une ou plusieurs des revendications 1 à 7, **caractérisé en ce que** les ligands X sont des ligands monodentates neutres, anioniques ou cationiques, des ligands de pontage multidentates ou des ligands chélatants multidentates.

9. Procédé selon la revendication 8, **caractérisé en ce que** les ligands X sont de préférence des acétylacétonates de la formule (11) comme représenté selon le Schéma 5, 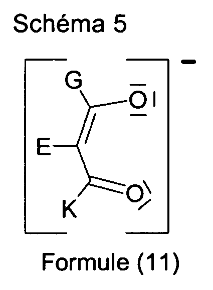 où:
K, G sont, de manière identique ou différente lors de chaque occurrence, un groupe alkyle linéaire ou ramifié comportant de 1 à 20 atomes de carbone, où un ou plusieurs groupes CH₂ non adjacents peuvent être remplacés par -O-, -S-, -NR¹-, -CONR²-, -CO-O-, -CO-, -CH=CH- ou -C≡C- et où un ou plusieurs atomes de H peuvent être remplacés par F ou des groupes aromatiques, ou un groupe aryle et/ou hétéroaryle comportant de 3 à 20 atomes de carbone ou un alcoxyde OR¹,
E est, de manière identique ou différente lors de chaque occurrence, un groupe alkyle linéaire ou ramifié comportant de 1 à 20 atomes de carbone, où un ou plusieurs groupes CH₂ non adjacents peuvent être remplacés par -O-, -S-, -NR¹-, -CONR²-, -CO-O-, -CO-, -CH=CH- ou -C≡C- et où un ou plusieurs atomes de H peuvent être remplacés par F ou des groupes aromatiques, ou un groupe aryle et/ou hétéroaryle comportant de 3 à 20 atomes de carbone,
R¹ présente la même signification que décrit selon la revendication 3.

10. Procédé selon une ou plusieurs des revendications 1 à 9, **caractérisé en ce qu'**un rayonnement micro-ondes présentant une fréquence de 500 à 10 000 MHz est utilisé.

11. Procédé selon une ou plusieurs des revendications 1 à 10, **caractérisé en ce que** la puissance utilisée est de 1 watt par litre à 10 000 watts par litre.

12. Procédé selon une ou plusieurs des revendications 1 à 11, **caractérisé en ce que** le rayonnement micro-ondes est du type monomodal.

13. Procédé selon une ou plusieurs des revendications 1 à 12, **caractérisé en ce qu'**il est mis en oeuvre au moyen d'un procédé continu ou selon un procédé par lots discontinu.

14. Procédé selon une ou plusieurs des revendications 1 à 13, **caractérisé en ce que** la/les liaison(s) C-H est (sont) une liaison C-H arylique, vinylique et/ou allylique

15. Procédé selon une ou plusieurs des revendications 1 à 14, **caractérisé en ce que** le rapport molaire du composé métallique sur les composés des formules (10a), (10b), (10c) est de 1:1 à 1:20.

16. Procédé selon la revendication 15, **caractérisé en ce que**, pour la synthèse de complexes homoleptiques, le rapport molaire du composé métallique sur les composés des formules (10a), (10b), (10c) est de 1:6 à 1:12.
